Europäisches Patentamt

European Patent Office

Office européen des brevets

(11) Publication number: **0 133 232**
**B1**

# (12) EUROPEAN PATENT SPECIFICATION

(45) Date of publication of patent specification: **28.10.87**    (51) Int. Cl.⁴: **G 11 B 19/00**

(21) Application number: **84108221.7**

(22) Date of filing: **12.07.84**

(54) **Data transfer apparatus for use with a flexible magnetic disk or the like.**

(30) Priority: **29.07.83 JP 139695/83**

(43) Date of publication of application:
**20.02.85 Bulletin 85/08**

(45) Publication of the grant of the patent:
**28.10.87 Bulletin 87/44**

(84) Designated Contracting States:
**CH DE FR GB LI NL SE**

(56) References cited:
**FR-A-2 458 128**
**GB-A-1 432 693**
**US-A-4 419 701**

(73) Proprietor: **TEAC CORPORATION**
**3-7-3, Naka-cho**
**Musashino-shi Tokyo (JP)**

(72) Inventor: **Tsuyuguchi, Hiroshi**
**11-8, Syoan 3-chome**
**Suginami-ku Tokyo (JP)**
Inventor: **Morita, Tsutomu**
**TEAC-nishikuboryo 3-7, Nishikubo 3-chome**
**Musashino-shi Tokyo (JP)**
Inventor: **Shoji, Makoto**
**Fussa-danchi 7-503 2-16, Minamidenen**
**Fussa-shi Tokyo (JP)**

(74) Representative: **Wey, Hans-Heinrich, Dipl.-Ing.**
**et al**
**Patentanwälte Müller-Börner & Wey**
**Widenmayerstrasse 49**
**D-8000 München 22 (DE)**

## Description

Background of the invention

This invention relates to apparatus employing disklike record media for the recording and/or reproduction of data, and more specifically to apparatus for date transfer with flexible magnetic disks now commonly referred to as floppy disks.

Floppy disks have found widespread acceptance in information processing and allied industries, as well as in offices in general, as compact data storage media. Being thin and limply flexible, the disks are usually encased in more rigid, apertured envelopes to make up disk assemblies or cartridges that are self supporting. There have also been suggested and used a variety of devices known as floppy disk drives (FDDs), for data transfer to and from such disk cartridges. The US—A—3 678 481 and the US—A—4 089 029 represent examples of such known FDDs.

A data transfer apparatus of the kind given above is known from the GB—A—1 432 693. This known data transfer apparatus comprises three FDDs which are not self contained but subservient to host equipment typically comprising a central processor unit (CPU) and an associated controller. The mode of use is the daisy chaining of the FDDs to the CPU via the controller, with the FDDs in parallel relation to each other. Each FDD has no power switch of its own. There is only one power switch which serves the complete data transfer apparatus. A problem has arisen in conjunction with this standardized power supply system. The FDDs are not necessarily used for data transfer at all times after the power switch of the complete system is turned on. Conventionally, however, power has been fed to the various components of the FDDs even when they are not in actual use. This of course has incurred a substantial waste of energy.

Summary of the invention

We object to that waste of energy and hereby propose an improved data transfer apparatus that has realized a remarkable curtailment of power consumption in a simple and thoroughly practicable manner and without in any way sacrificing its operation.

According to our invention, stated in its broadest aspect, there is provided a data transfer apparatus according to claim 1.

As will be understood, the apparatus need not perform data transfer between record medium and transducer when the drive select signal is in the second prescribed state and so conditions the data select gate to block the passage of data. Consequently, during each second prescribed state of the data select signal, the first and second drive circuits and the read/write circuit need not be powered as these circuits are normally required to operate only during the progress of actual data transfer. Any one or more of these circuits may therefore be connected to the power supply means via the power control switch means so as to be powered only when the data select gate is conditioned to pass data by the drive select signal. Any other standard component of the apparatus that need not operate when the drive select signal is in the second prescribed state may likewise be connected to the power supply means via the power control switch means. Examples of such additional circuits that may be connected to the power control switch means are a sensor control circuit for sensing the angular position of the record medium, and a "ready" circuit responsive to an output from the sensor control circuit for sensing the fact that the record medium is ready for data transfer.

Some components, however, should advantageously be powered even when the data select gate is conditioned to block the passage of data. Such components may be coupled directly to the power supply means. An example of such components is a transducer position control circuit for controlling the position of the transducer on the record medium, as the circuit includes a counter for constantly storing information indicative of the radial position of the transducer on the record medium. Another example is an interface unit if the apparatus is interfaced with host equipment.

Our invention is disclosed herein as adapted for a multiple data transfer system having a plurality of FDDs interfaced with and daisy chained to a CPU via a controller. The controller delivers the drive select signals to the respective FDDs, each constructed as in the foregoing summary, for selective use of the record media loaded therein. The drive select signals have heretofore been used for that purpose, so that our invention requires no substantial alteration of the existing parts of FDDs, or of the complete system, other than the provision of the power control switch means and associated electrical connections to attain the objectives for which it is intended.

The invention itself will best be understood, from a study of the following description and appended claims, with reference had to the attached drawings showing some preferable embodiments of the invention.

Brief description of the drawings

Fig. 1 is a block diagram of the data transfer system embodying the principles of our invention, with the data transfer system comprising a plurality of daisy chained FDDs each having a flexible magnetic disk cartridge loaded therein for selective data transfer;

Fig. 2 is a plan view of a typical form of the flexible magnetic disk cartridge for use with each FDD of the data transfer system of Fig. 1;

Fig. 3 is a block diagram showing in greater detail the read/write circuit in each FDD of the data transfer system of Fig. 1;

Fig. 4 is a schematic electrical diagram showing in detail a practical example of the power control switch built into each FDD of the Fig. 1 system in accordance with our invention;

Fig. 5 is a diagram plotting the waveforms appearing in various parts of the Fig. 1 system, as well as the states of the power lines of that system, the diagram being useful in explaining the operation of the data transfer system;

Fig. 6 is a block diagram showing part of a slight modification of each FDD of the Fig. 1 system;

Fig. 7 is also a block diagram showing part of another slight modification of each FDD of the Fig. 1 system;

Fig. 8 is also a block diagram showing part of still another still modification of each FDD of the Fig. 1 system; and

Fig. 9 is a plan view of another example of record medium suitable for use with the data transfer apparatus of our invention.

Description of the preferred embodiments

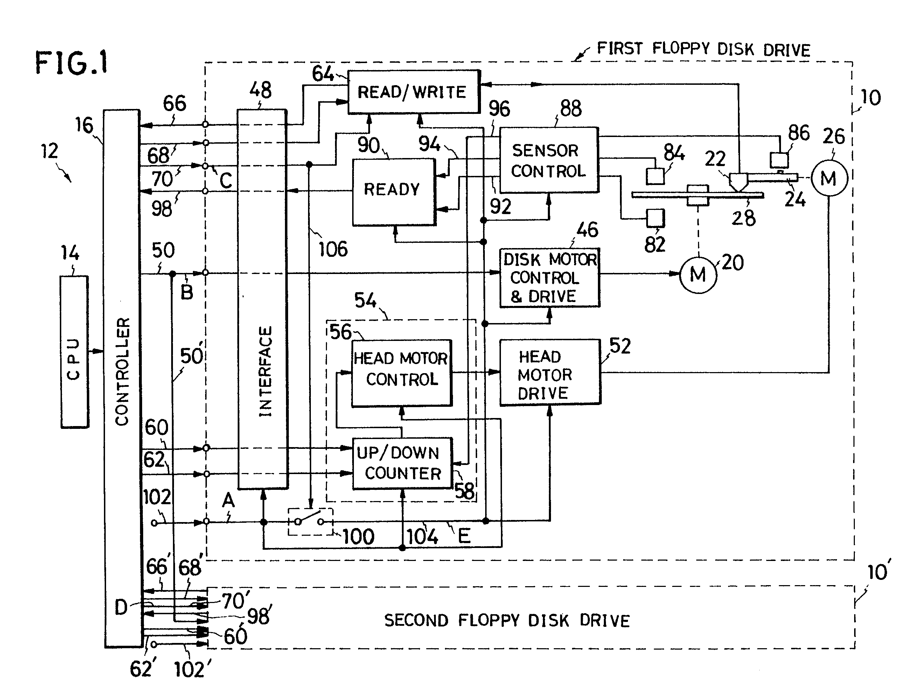

We have illustrated in Fig. 1 the multiple data transfer system which, we believe, represents the best mode of carrying out our invention. The data transfer system comprises a plurality of, two in the illustrated embodiment, FDDs 10 and 10' daisy chained to host equipment 12 composed of a CPU 14 and a controller 16. The CPU 14 is well known in the art. The controller 16 is also a standard component of this type of data transfer system, functioning to deliver and receive signals to and from the FDDs 10 and 10' in a manner more fully set forth hereafter. Suffice it to say, therefore, that the controller 16 broadly comprises an interface for interaction with the CPU 14, a controller/formatter section, and another interface for interaction with the FDDs 10 and 10'.

The two FDDs 10 and 10' are of like construction. We will therefore describe only the first FDD 10 in detail, it being understood that the same description applies to the other FDD 10'.

The representative FDD 10 is shown to have loaded therein a replaceable floppy disk cartridge 18 having a magnetic disk for rotation by an electric motor 20. We have not illustrated the drive mechanism for imparting the rotation of this motor 20 to the magnetic disk, nor the clamp mechanism for clamping the magnetic disk against the drive mechanism, as these mechanisms are per se well known in the art and do not constitute features of our invention. Further, in order to facilitate description, we have shown the disk cartridge 18 to be single sided, rather than double sided, with only one magnetic transducer head 22 disposed on one side thereof for data transfer. The transducer head 22 is mounted to a carriage 24 for movement more or less in a radial direction of the disk cartridge 18 for track to track accessing. Employed for such radial travel of the transducer head is another electric motor 26 of the bidirectional stepping type having, for example, four phase windings to be excited in a controlled sequence to cause stepwise rotation of the rotor.

We will hereinafter refer to the first recited motor 20 as the disk motor, and to the second motor 26 as the head motor, by way of contradistinction from each other. While the disk motor 20 may directly drive the magnetic disk, the head motor 26 must of course be coupled to the head carriage 24 via a rotary to linear converter, not shown, which also is well known in the art.

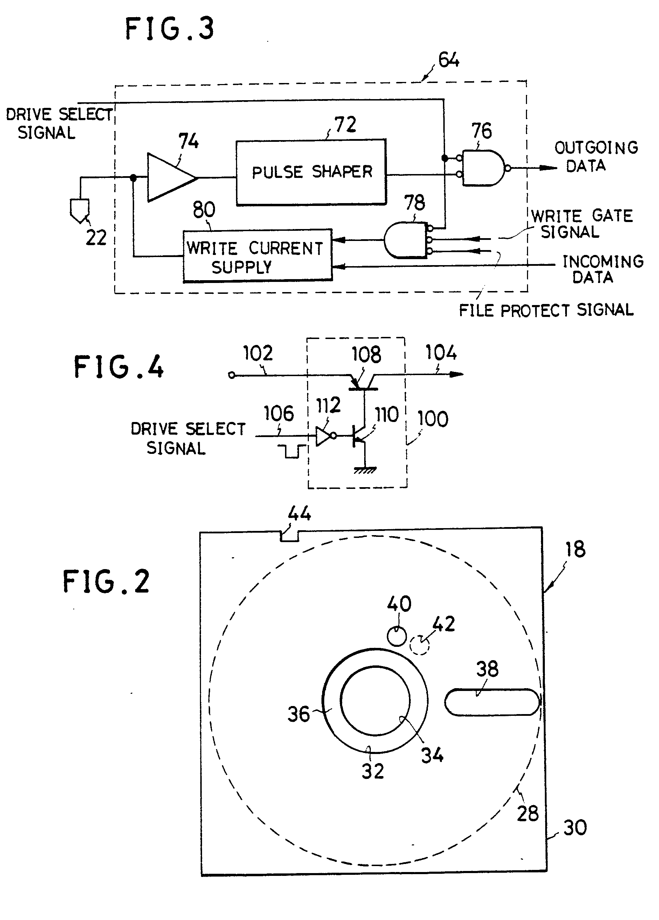

Reference is now directed to Fig. 2 in order to explain a typical construction of the floppy disk cartridge 18 for use with the FDD 10. It has the aforesaid flexible magnetic disk 28 enclosed in a square envelope 30. This envelope has in each of its opposite surfaces a central aperture 32 larger than a concentric central aperture 34 in the disk 28, so that an annular portion 36 of the disk is exposed. The disk 28 is to have this exposed portion 36 clamped by the unshown clamp mechanism for rotation by the disk motor 20. The envelope 30 also has an elliptical opening 38 that serves to expose a radial portion of the disk 28. The transducer head 22 is to make data transfer contact with this exposed radial portion of the disk. Further a small hole 40 is formed through both surfaces of the envelope 30. When the disk 28 rotates within the envelope 30, an index hole 42 in the disk comes into register with the hole 40 at intervals and so allows passage of light or radiant energy to generate an electric pulse signal. A cutout 44 in a marginal edge of the envelope 30 is to be masked by the user against the passage of radiant energy if the disk 28 bears information that is not to be erased inadvertently.

With reference back to Fig. 1 the disk motor 20 is connected to a disk motor control and drive circuit 46 to be controllably driven thereby. The disk motor control and drive circuit 46 includes feedback control means for holding the rotation of the disk motor 20 at a prescribed constant speed in response to an input signal representative of the actual speed of the disk motor, and drive means for energizing the disk motor under the control of the feedback control means.

Further the disk motor control and drive circuit 46 is connected via an interface 48 to the controller 16 of the host equipment 12 to receive therefrom the standard MOTOR ON signal by way of a line 50. It will be seen that the line 50 has a branch line 50' connected to the second FDD 10'. Thus the MOTOR ON signal is common to all the daisy chained FDDs and has heretofore been used to set all the disk motors into and out of rotation simultaneously. According to our invention, however, the disk motor of each FDD does not directly respond to the MOTOR ON signal, as will be more fully explained presently.

The head motor 26 is connected to a head motor drive circuit 52 to be controllably driven thereby. If the head motor 26 is a four phase stepping motor, as we have assumed above, then the head motor drive circuit 52 may comprise four switching transistors for selectively energizing the four sets of windings of the head motor.

The head motor drive circuit 52 is itself under the control of a transducer position control circuit 54 herein shown to comprise a head motor control circuit 56 and an up/down counter 58. The head motor control circuit 56 functions to deliver four phase drive control signals to the head motor drive circuit 52 so as to cause therethrough the bidirectional, incremental rotation of the head motor 26 in a desired manner. The up/down counter 58 is connected via the interface 48 to the controller 16 to receive therefrom a DIRECTION SELECT signal and a STEP signal by way of lines 60 and 62 respectively. The DIRECTION SELECT signal determines the direction in which the transducer head 22 is to be moved by the head motor 26, that is, either radially inward or outward of the disk cartridge 18. The STEP signal represents the extent (the number of tracks) to which the transducer head 22 is to be moved in either direction. The up/down counter 58 responds to these input signals by delivering a corresponding output to the head motor control circuit 56, which in turn generates the noted four phase drive control signals accordingly for application to the head motor drive circuit 52.

The transducer head 22 is connected to a read/write circuit 64. As the present data transfer system is equipped for both introduction and recovery of data to and from the disk cartridges, the read/write circuit 64 functions to direct the data read by the transducer head 22 to the controller 16 via the interface 48 and a line 66, and to send the data to be written, delivered from the controller by way of a line 68, on to the transducer head. The read/write circuit 64 is further connected via the interface 48 to the controller 16 by way of another line 70 to input a DRIVE SELECT signal. The DRIVE SELECT signal controls the passage of the outgoing and incoming data through the read/write circuit 64 in a manner that will become apparent from the following description of Fig. 3.

Fig. 3 is a more detailed, although still somewhat schematic, illustration of the read/write circuit 64. Included in this circuit is a pulse shaper 72 connected to the transducer head 22 via a read amplifier 74. The data recovered from the disk cartridge by the transducer head 22 is amplified by the read amplifier 74, and the amplified replica of the recovered data enters the pulse shaper 72 thereby to be shaped into a form suitable for further processing. Connected downstream of the pulse shaper 72 is an AND type OR gate 76, having another input connected to receive the DRIVE SELECT signal from the controller output line 70 via the interface 48. The output of this OR gate is connected via the interface 48 to the controller input line 66.

Consequently the OR gate 76 allows the passage of the recovered data therethrough, toward the controller 16, only when the DRIVE SELECT signal is low. The OR gate 76 may therefore be called a data select gate.

Also included in the read/write circuit 64 is another data select gate in the form of an AND type NOR gate 78 designed to control the passage through the circuit 64 of data to be written on the disk cartridge 24. The NOR gate 78 has three inputs, one for receiving the DRIVE SELECT signal from the controller 16 by way of its output line 70, another input for receiving a WRITE GATE signal from the controller 16, and still another for receiving an internally generated FILE PROTECT signal.

The WRITE GATE signal goes low when the data already written on the disk may be erased for the introduction of new data. The FILE PROTECT signal, on the other hand, goes high when the cutout 44, Fig. 2, in the disk cartridge envelope 30 is masked against the passage of radiant energy to inhibit the erasure of the recorded data. The output of the NOR gate 78 is connected to a write current supply circuit 80, to which there is also connected via the interface 48 the controller output line 68 for the delivery of the data to be written. The output of the write current supply circuit 80 is connected directly to the transducer head 22.

Thus the output from the NOR gate 78 goes high when its three input signals, the DRIVE SELECT signal, WRITE GATE signal, and FILE PROTECT signal, all go low. This high output enables the write current supply circuit 80 to deliver a write current, representative of the desired data to be written on the disk, to the transducer head 22.

Referring again to Fig. 1, we will now describe several sensor assemblies and associated circuit means included in the FDD 10. At 82 is shown an index sensor assembly for sensing the angular position of the magnetic disk 28, Fig. 2, from the index hole 42 moving into and out of register with the hole 40 in the disk envelope 30. A disk sensor assembly 84 senses the presence or absence of the disk cartridge 18 in a preassigned data transfer position within the FDD. A head sensor assembly 86 senses from the position of the head carriage 24 the position of the transducer head 22 in the radial direction of the magnetic disk. The index sensor assembly 82, disk sensor assembly 84, and head sensor assembly 86 can all be conventional photoelectric sensing assemblies, each comprising a light source such as a light emitting diode and a photosensor such as a phototransistor.

The three sensor assemblies 82, 84 and 86 named above are all electrically connected to a sensor control circuit 88. Among the functions of this sensor control circuit is the supply of electric current to the light sources of the sensor assemblies 82, 84 and 86. The sensor control circuit 88 further responds to the electric outputs from the photosensors of the sensor assemblies 82, 84 and 86 by producing an index signal, disk presence signal, and head position signal. The index signal and disk presence signal, indicative respectively of the angular position of the magnetic disk and of the presence or absence of the disk cartridge in the data transfer position, are both delivered to a "ready" circuit 90 by way of lines 92 and 94. The head position signal, representative of the radial position of the transducer head 22 on the magnetic disk, is applied to the up/down counter 58 of the transducer position control circuit 54 by way of a line 96. Although not illustrated, a "file protect" sensor assembly is assumed to be provided in the vicinity of the data transfer position of the disk cartridge 18. As the name implies, the "file protect" sensor assembly senses from the cutout 44, Fig. 2, in the disk cartridge envelope 30 whether data may be written on the disk or not. The output from the "file protect" sensor assembly is utilized as above stated for controlling the operation of the read/write circuit 64 as the FILE PROTECT signal.

The "ready" circuit 90 determines, from the index signal and disk presence signal fed from the sensor control circuit 88, whether or not the magnetic disk is ready for the commencement of writing or reading. A READY output signal of the circuit 90, conveying this information, is directed via the interface 48 to the controller 16 by way of a line 98.

The reference numeral 100 in Fig. 1 denotes a power control switch constituting a feature of our invention. The power control switch 100 is connected between an external power line 102 conducting electric power to the FDD 10 and an internal power line 104 leading to some selected component or components of the FDD. The power control switch 100 further has an actuating signal line 106 connected to the controller output line 70 via the interface 48, in order to be turned on and off by the DRIVE SELECT signal. Connected to a supply circuit, not shown, serving the complete data transfer system, the external power line 102 applies a prescribed working voltage to the FDD 10 when the power switch, also not shown, of the system is turned on. We have herein shown the internal power line 104 connected to the disk motor control and drive circuit 46, head motor drive circuit 52, read/write circuit 64, sensor control circuit 88, and "ready" circuit 90. All these circuits 46, 52, 64, 88 and 90 are therefore powered on and off by the power control switch 100. It will also be noted that the external power line 102 is connected directly to the interface 48 and to the head motor control circuit 56 and up/down counter 58 of the head position control circuit 54. These circuits 48, 56 and 58 are therefore unaffected by the power control switch 100.

Fig. 4 shows an example of construction the power control switch 100 may take in practice. A switching transistor 108 is connected between external power line 102 and internal power line 104. For the on/off control of this transistor 108 another transistor 110 is connected between the base of the first recited transistor and ground. The second transistor 110 has its base connected to the signal line 106 to be actuated by the DRIVE SELECT signal. The power control switch 100 must close when the DRIVE SELECT signal is low in the illustrated embodiment. Employed to this end is a NOT circuit 112 which functions to invert the DRIVE SELECT signal before its application to the second transistor 110. Thus, whenever the DRIVE SELECT signal goes low, the second transistor 110 becomes conductive and so causes conduction through the first transistor 108 for the application of the supply voltage to the circuits 46, 52, 64, 88 and 90.

We have so far described the construction of the first FDD 10, which is interfaced with the controller 16 via the signal lines 50, 60, 62, 66, 68, 70 and 90. An additional line, not shown, connects the controller 16 to the FDD 10 for the delivery of the noted WRITE GATE signal to the NOR gate 78, Fig. 3, of the read/write circuit 64. The data transfer system of this type usually has still another line, also not shown, for the delivery of an IN USE signal to each FDD, the IN USE signal being indicative of the fact that the FDD is in use for data transfer.

The second FDD 10' is likewise interfaced with the controller 16 via signal lines 50', 60', 62', 66', 68', 70', 90', etc., similar to those between first FDD 10 and controller 16. At 102' is shown an external power line connected to the second FDD 10'.

Operation

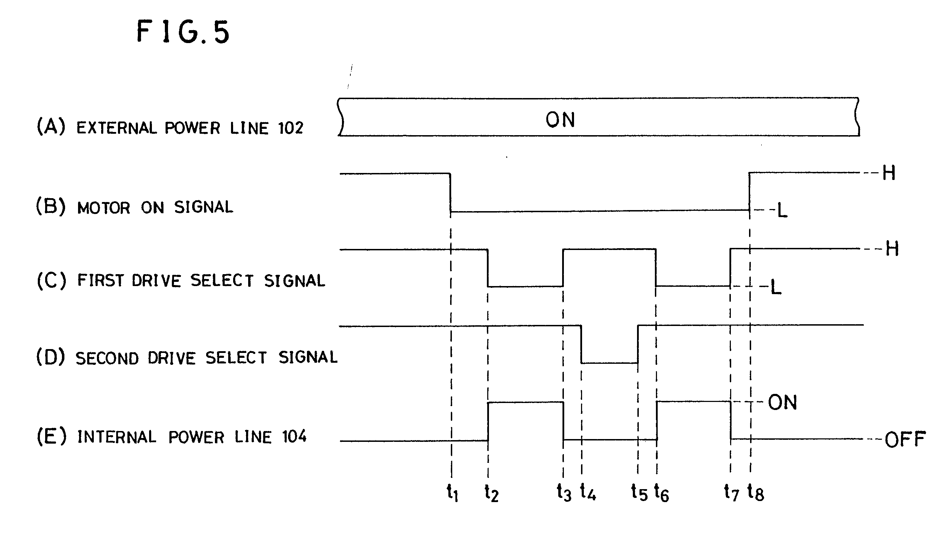

In the following operational description of the data transfer system, configured as in the foregoing, we will refer to the waveform diagram of Fig. 5. Depicted in this figure are, from top to bottom:

(A) The state of the external power line 102 connected to the first FDD 10.

(B) The common MOTOR ON signal applied from the controller 16 to the disk motor control and drive circuits 46 of both FDDs 10 and 10'.

(C) The first DRIVE SELECT signal applied from the controller to the read/write circuit 64 and power control switch 100 of the first FDD 10.

(D) The second DRIVE SELECT signal applied from the controller to the read/write circuit and power control switch of the second FDD 10'.

(E) The state of the internal power line 104 of the first FDD 10.

We have further indicated in Fig. 1 the lines where the waveforms of Fig. 5 appear, by the associated letters (A) through (E). Reference may therefore be had to both Figs. 1 and 5, unless otherwise notified, for a better understanding of the operational description.

The external power line 102 conducts power to the first FDD 10, as at (A) in Fig. 5, as the unshown power switch of the data transfer system is closed after the disk cartridge 18 has been loaded in the FDD and clamped in position therein. However, as long as the power control switch 100 in accordance with our invention is held open, the supply voltage will be impressed only to the interface 48, head motor control circuit 56 and up/down counter 58 of the FDD 10, and not to the disk motor control and drive circuit 46, head motor drive circuit 52, read/write circuit 64, sensor control circuit 88, and "ready" circuit 90.

The transducer head 22 must be returned to the "track zero" position on the magnetic disk of the loaded disk cartridge 18 upon closure of the system power switch. To make this possible the DRIVE SELECT signal goes low and is held in that state for a certain length of time, with the consequent closure of the power control switch 100 during the same length of time. As the transducer head 22 returns to track zero, through the procedure that is routine in this type of apparatus, the sensor control circuit 88 senses that position of the transducer head from the output from the head sensor assembly 86 and further operates to reset the up/down counter 58 of the head position control circuit 54 via the line 96. The DRIVE SELECT signal goes high following the return of the transducer head 22 to the "track zero" position and the subsequent resetting of the up/down counter 58.

Thereafter, as at (B) in Fig. 5, the MOTOR ON signal is shown to go low at a moment t1. This signal is common to all the daisy chained FDDs 10 and 10'. Conventionally, therefore, the disk motors 20 of all the FDDs have simultaneously set into rotation when the MOTOR ON signal goes low. However, our invention does not yet allow the rotation of the disk motors, as the DRIVE SELECT signals for the FDDs 10 and 10' are both still held high as at (C) and (D) in Fig. 5. The power control switch 100 of the FDD 10, for example, remains open to hold the disk motor control and drive circuit 46 deenergized.

When the DRIVE SELECT signal for the first FDD 10 goes low at a subsequent moment t2, the power control switch 100 becomes closed to allow energization of the disk motor drive and control circuit 46 by way of the internal power line 104, as at (E) in Fig. 5. Thereupon the disk motor 20 starts rotation as dictated by the MOTOR ON signal from the controller 16. The closure of the power control switch 100 results also in the energization of the head motor drive circuit 52, read/write circuit 64, sensor control circuit 88, and "ready" circuit 90.

As has been stated with reference to Fig. 3, the DRIVE SELECT output line 70 of the controller 16 is further connected to the outgoing data select gate 76 and incoming data select gate 78 of the read/write circuit 64. When the DRIVE SELECT signal goes low as above, the outgoing data select gate 76 becomes conditioned to allow the passage of the recovered data. The incoming data select gate 78 also becomes conditioned to allow the passage of the data to be written, provided that the WRITE GATE signal and FILE PROTECT signal are both low. Thus, during the period from moment t2 to moment t3, when the first DRIVE SELECT signal is held low as at (C) in Fig. 5 to allow energization of all the constituent circuits of the first FDD 10, reading or writing is possible in the same way as heretofore.

The second DRIVE SELECT signal, on the other hand, is shown to go low at a moment t4, immediately following the moment t3 when the first DRIVE SELECT signal goes high, as at (D) in Fig. 5. Accordingly, even though the common MOTOR ON signal has been held low from the moment t1, the power control switch of the second FDD 10' has remained open until the moment t4. This will realize a very substantial saving of power. The second DRIVE SELECT signal is shown to go high at a moment t5 upon completion of data transfer in the second FDD 10'.

The first DRIVE SELECT signal is shown to remain high from the moment t3 to a moment t6, the latter moment following the moment t5 when the second DRIVE SELECT signal goes high. The power control switch 100 of the first FDD 10 is held open during this period, as at (E) in Fig. 5, so that the disk motor 20 is held out of rotation in the face of the sustained low state of the MOTOR ON signal as at (B) in Fig. 5. The circuits 46, 52, 64, 88 and 90 are also held unenergized. A saving of power is thus realized during the period from moment t3 to moment t6, too.

It should be appreciated that the up/down counter 58 of the head position control circuit 54 has been held energized, being connected directly to the external power line 102, from moment t3 to moment t6. Such constant energization of the counter 58 enables the same to hold in storage the information representative of the angular position of the rotor of the head motor 26, or of the radial position of the transducer head 22 on the magnetic disk, at the moment t3 when the first DRIVE SELECT signal goes high. Consequently, when the first DRIVE SELECT signal goes low again at the moment t6, no recalibration of the head position is necessary, making possible the immediate recommencement of data transfer between disk and head. The first DRIVE SELECT signal is shown to go high at a moment t7, as at (C) in Fig. 5, with the consequent opening of the power control switch 100 as at (E) in Fig. 5. The common MOTOR ON signal is shown to go high at a subsequent moment t8, as at (B) in Fig. 5, to complete a single run of operation of the daisy chained FDDs 10 and 10'.

Although we have already set forth the advantages gained by our invention, we may restudy in further detail the particular advantages of the illustrated data transfer system after having thus fully disclosed its construction and operation. The advantages are:

1. The power consumption of each FDD, while it is standing by for data transfer with the power switch of the complete system closed, can be reduced to approximately one third that of the prior art. This power saving capability manifests itself as an even greater advantage when the invention is applied to battery powered systems.

2. The power control switch 100 does not require manual activation, nor is the provision of any particular switch activating means necessary other than the signal line 106.

3. Once the transducer head is returned to the "track zero" position on the magnetic disk when the system power switch is initially closed, the head position is constantly held in storage in the counter of the head position control circuit in spite of subsequent changes in the state of the DRIVE SELECT signal. Thus, whenever the DRIVE SELECT signal goes low, reading or writing can be recomenced with little or no delay. The information stored in the counter of the head position control circuit is used further for controlling the write current in accordance with the radial position of the transducer head on the magnetic disk, and for the selective use of the filter for the removal of the unnecessary frequency component from the data being read out.

## Second form

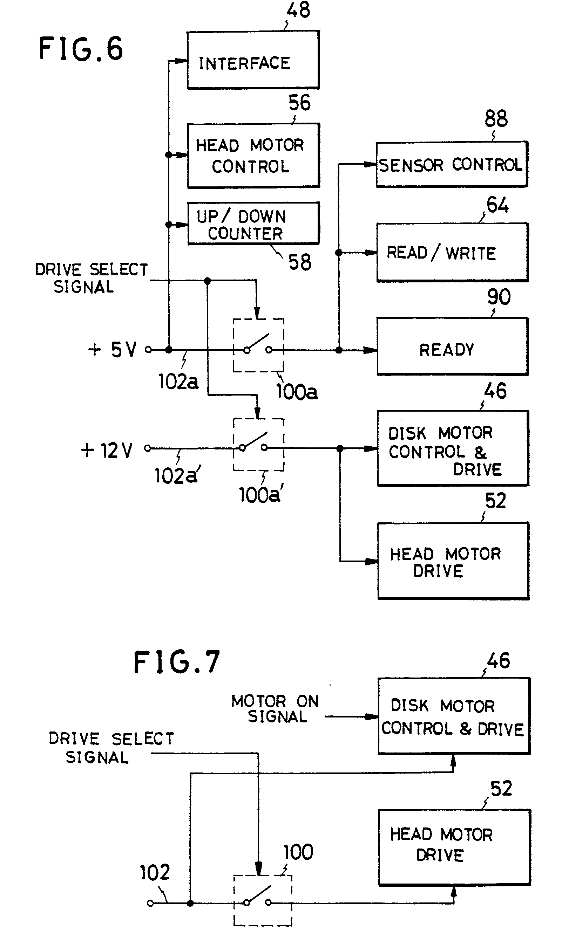

In Fig. 6 is shown our invention as adapted for a data transfer system having two separate external power lines 102a and 102a' for the application of different supply voltages to each FDD. The first power line 102a is intended for the application of a five volt supply voltage to the interface 48, head motor control circuit 56, counter 58, sensor control circuit 88, read/write circuit 64, and "ready" circuit 90. The second power line 102a' is intended for the application of a 12 volt supply voltage to the disk motor control and drive circuit 46 and head motor drive circuit 52.

In this application we suggest the provision of a first power control switch 100a between the first power line 102a and the sensor control circuit 88, read/write circuit 64 and "ready" circuit 90, and of a second power control switch 100a' between the second power line 102a' and the disk motor control and drive circuit 46 and head motor drive circuit 52. As taught by the Fig. 1 embodiment, the interface 48, head motor control circuit 56 and counter 58 are all connected directly to the first power line 102a. The two power control switches 100a and 100a' can each be constructed as in Fig. 4 and are to close in response to the low state of the DRIVE SELECT signal. The other details of construction and operation are substantially as set forth above in connection with Figs. 1 through 5.

## Third form

Fig. 7 shows another slight modification of the Fig. 1 embodiment, wherein the disk motor drive and control circuit 46 is connected directly to the external power line 102 whereas the head motor drive circuit 52 is connected to the external power line via the power control switch 100. Thus powered directly from the external power line 102, as has been the case heretofore, the disk motor drive and control circuit 46 drives the disk motor 20, Fig. 1, under the control of the MOTOR ON signal, regardless of whether the associated DRIVE SELECT signal is high or low. The head motor drive circuit 52, on the other hand, is powered only when the DRIVE SELECT signal is low as in the Fig. 1 embodiment.

## Fourth form

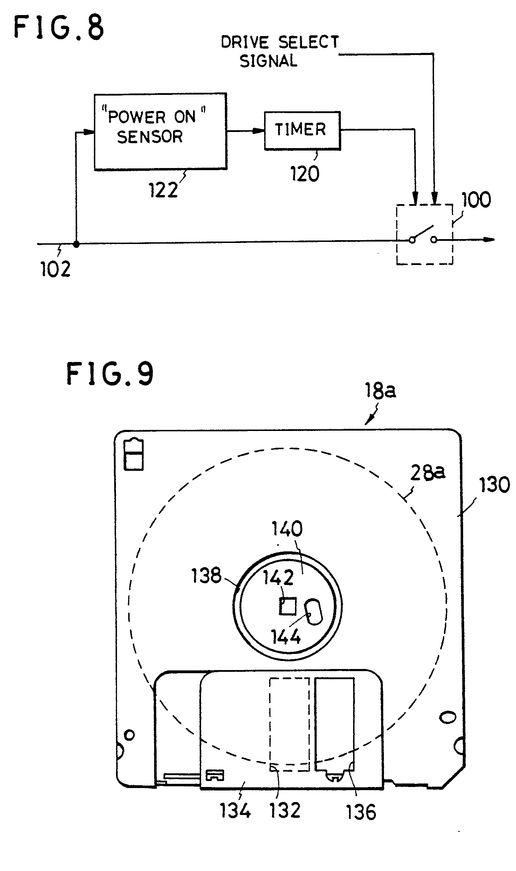

In still another modification of the Fig. 1 embodiment shown in Fig. 8, the power control switch 100 is actuated not only by the DRIVE SELECT signal but also by an output from a timer 120 which in turn is responsive to an output from a "power on" sensor circuit 122. Connected to the external power line 102, the "power on" sensor circuit 122 triggers the timer 120 upon closure of the unshown power switch of the data transfer system. The output from the timer 120 goes low, for instance, on triggering and remains in that state for a predetermined length of time thereafter, resulting in the closure of the power control switch 100 during the same period.

Connected to the power control switch 100 in this case is at least the head motor drive circuit 52 as, for example, in the Fig. 7 embodiment. The head motor drive circuit 52 is powered immediately upon closure of the system power switch to enable the return of the transducer head to the "track zero" position on the magnetic disk. The timer output itself may also be used for the return of the transducer head to the initial position.

## Fifth form

Fig. 9 illustrates another preferred form of record medium that may be employed in substitution for the disk cartridge 18 of Fig. 2 with the data transfer apparatus of our invention. Generally designated 18a, the alternative record medium also has a flexible magnetic disk 28a, with a diameter of approximately 3.5 inches (86 millimeters), housed in an envelope 130 which is molded of synthetic resin material and which has greater rigidity than the envelope 30 of the disk cartridge 18. The envelope 130 has a slot 132 formed in at least one side thereof to expose a radial portion of the disk 28a for data transfer with the transducer head. The slot 132 is normally closed by a slidable cover 134, itself having a slot 136 formed therein, on the envelope 130. The cover 134 is sprung and normally held in the illustrated position on the envelope 130, with the slot 136 therein out of register with the slot 132 in the cover. In use, then, the cover 134 is slid over the envelope 130 against the spring pressure to bring the slot 136 into register with the slot 132.

The envelope 130 has further formed therein a central aperture 138 to expose a central portion of the magnetic disk 28a. This disk has a rigid hub 140 at its exposed central portion. In the form of a metal disk, the hub 140 is to be magnetically attached to a drive hub, not shown, of the data transfer apparatus. The hub 140 has formed therein a central square opening 142 and an eccentric elliptical opening 144 for the insertion of a spindle and drive pin, both not shown, of the data transfer apparatus.

## Possible modifications

A variety of modifications or alterations will occur to one skilled in the art to conform to design preferences or to specific requirements of the applications of the invention. For example, the sensor control circuit 88 might be connected directly to the power supply, instead of via the power control switch 100 or 100a as in the Fig. 1 or 6 embodiment. Further the head motor control circuit 56, counter 58 might be connected to the power supply via the power control switch 100. In short, according to the broadest aspect of our invention, any desired one or more of the pertinent components of the data transfer apparatus may be connected to the power supply via the power control switch.

## Claims

1. A data transfer apparatus for use with a disklike record medium (28) such as a flexible magnetic disk, the apparatus comprising:

(a) a first motor (20) for imparting rotation to the record medium (28);

(b) a first drive circuit (46) for controllably driving the first motor (20);

(c) a transducer (22) arranged for data transfer with the record medium (28);

(d) a second motor (26) for moving the transducer (22) radially of the record médium (28);

(e) a second drive circuit (52) for controllably driving the second motor (26);

(f) a read/write circuit (64) connected to the transducer (22) and including at least one data select gate for controlling the passage of data therethrough;

(g) means for applying a drive select signal to the data select gate of the read/write circuit (64) in order to cause the same to selectively pass the data therethrough, the drive select signal having a first prescribed state for causing the data select gate to pass the data and a second prescribed state for causing the data select gate to block the data;

(h) power supply means for conducting electric power to the first (46) and second (52) drive circuits and the read/write circuit (64), characterized by

(i) power control switch means (100) connected between the power supply means and at least one of the first (46) and second (52) drive circuits and the read/write circuit (64), the power control switch means (100) being adapted to be closed when the drive select signal is in the first prescribed state and to be opened when the drive select signal is in the second prescribed state;

(j) whereby said one of the first (46) and second (52) drive circuits and the read/write circuit (64) is supplied with electric power from the power supply means via the power control switch means (100) only when the data select gate of the read/write circuit (64) is conditioned to pass the data therethrough by the drive select signal.

2. A data transfer apparatus according to claim 1, characterized in that all of the first (46) and second (52) drive circuits and the read/write circuit (64) are connected to the power supply means via the power control switch means (100).

3. A data transfer apparatus according to claim 1, characterized by further comprising a transducer position control circuit (54), including a counter (58) for storing information indicative of the position of said transducer (22) in a radial direction of the record medium (28), for controlling the second motor (20) via the second drive circuit (22), the transducer position control circuit (54) being connected directly to the power supply means, so that the counter (58) can constantly hold in storage the desired information powered regardless of whether the data select gate of the read/write circuit is conditioned to pass or block the data.

4. A data transfer apparatus according to claim 1, characterized by further comprising:

(a) a sensor control circuit (88) for sensing the angular position of the record medium (28) and

(b) a "ready" circuit responsive to an output from the sensor control circuit (88) for sensing the fact that the record medium (28) is ready for data transfer;

(c) the sensor control circuit (88) and the "ready" circuit (90) being both connected to the power supply means via the power control switch (100) and thereby being powered only when the data select gate or the read/write circuit (64) is conditioned to pass the data by the drive select signal.

5. A data transfer apparatus according to claim 1, characterized in that the power supply means comprises:

(a) first power supply means for applying a first supply voltage to the first (46) and second (52) drive circuits and

(b) second power supply means for applying a second supply voltage, different from the first supply voltage, to the read/write circuit (64), and in that the power control switch means (100) comprises:

(a) a first power control switch (100a) connected between the power supply means and the first (46) and second (52) drive circuits and

(b) a second power control switch (100a) connected between the second power supply means and the read/write circuit (64).

6. A data transfer apparatus according to claim 1, characterized in that said one of the first (46) and second (52) drive circuits and the read/write circuit (64) is the second drive circuit.

7. A data transfer apparatus according to claim 1, characterized by further comprising:

(a) a "power on" sensor circuit (122) connected to the power supply means for producing an output when the apparatus is electrically turned on and

(b) a timer (120) responsive to the output from the "power on" sensor circuit (122) for holding the power control switch means (100) closed for a prescribed length of time after the apparatus is electrically turned out.

8. A data transfer system having a plurality of disk drives (10, 10') daisy chained to host equipment to be controlled thereby, the host equipment producing control signals including a drive select signal for application to the disk drives, each disk drive comprising:

(a) power supply means;

(b) an interface (48) for providing interaction between the host equipment and the disk drive (10, 10'), the interface (48) receiving the control signals from the host equipment and being connected directly to the power supply means to be powered thereby;

(c) a replaceable disklike record medium (28);

(d) a transducer (22) arranged for data transfer with the record medium (28);

(e) a first motor (20) for imparting rotation to the record medium (28);

(f) a first drive circuit (46) for controllably driving the first motor (20);

(g) a second motor (26) for moving the transducer (22) radially of the record medium;

(h) a second drive circuit (52) for controllably driving the second motor (26);

(i) a read/write circuit (64) connected to the transducer (22) and including at least one data select gate for controlling the passage of data therethrough the data select gate being connected to the interface (48) for receiving therethrough the drive select signal from the host equipment, the drive select signal having a first prescribed state for causing the data select gate to pass the data and a second prescribed state for causing the data select gate to block the data,

characterized by

(j) power control switch means (100) connected between the power supply means and at least one of the first (46) and second (52) drive circuits and the read/write circuit (64), the power control switch means (100) being adapted to be closed when the drive select signal is in the first prescribed state and to be opened when the drive select signal is in the second prescribed state;

(k) whereby said one of the first (46) and second (52) drive circuits and the read/write circuit (64) of each disk drive (10, 10') is supplied with electric power from the power supply means via the power control switch means only when the data select gate of the read/write circuit (64) is conditioned to pass the data therethrough by the associated drive select signal.

**Patentansprüche**

1. Datentransfergerät zur Verwendung mit einem plattenartigen Aufzeichnungsmedium (28) wie einer flexiblen Magnetplatte, mit:

a) einem ersten Motor (20), um dem Aufzeichnungsmedium (28) eine Drehung zu verleihen;

b) einer ersten Antriebsschaltung (46), um den ersten Motor (29) steuerbar anzutreiben;

c) einem Wandler (22), der für den Datentransfer mit dem Aufzeichnungsmedium (28) eingerichtet ist;

d) einem zweiten Motor (26), um den Wandler (22) radial zum Aufzeichnungsmedium (28) zu bewegen;

e) einer zweiten Antriebsschaltung (52), um den zweiten Motor (26) steuerbar anzutreiben;

f) einer Lese/Schreib-Schaltung (64), die mit dem Wandler (22) verbunden ist und wenigstens ein Datenauswahltor einschließt, um die Datenpassage durch dasselbe zu steuern;

g) Einrichtungen zum Anlegen eines Antriebsauswahlsignals an das Datenauswahltor der Lese/Schreib-Schaltung (64), um dasselbe zu veranlassen, die Daten wahlweise durchzulassen, wobei das Antriebsauswahlsignal einen ersten vorgeschriebenen Zustand, um das Datenauswahltor zu veranlassen, die Daten durchzulassen, und einen zweiten vorgeschriebenen Zustand hat, um das Datenauswahltor zu veranlassen, die Daten zu blockieren, und

h) Stromversorgungseinrichtungen zum Leiten von elektrischem Strom an die erste (46) und die zweite (52) Antriebsschaltung und die Lese/Schreib-Schaltung (64),

gekennzeichnet durch

i) eine Stromsteuer-Schalteinrichtung (100), die zwischen die Stromversorgungseinrichtungen und wenigstens eine der ersten (46) und zweiten (52) Antriebsschaltungen und der Lese/Schreib-Schaltung (64) geschaltet ist, wobei die Stromsteuer-Schalteinrichtung (100) geschlossen werden kann, wenn das Antriebsauswahlsignal sich in dem ersten vorgeschriebenen Zustand befindet, und geöffnet werden kann, wenn das Antriebsauswahlsignal sich in dem zweiten vorgeschriebenen Zustand befindet,

j) wodurch die eine der ersten (46) und zweiten (52) Antriebsschaltungen und der Lese/Schreib-Schaltung (64) nur dann mit elektrischem Strom aus dem Stromversorgungen über die Stromsteuer-Schalteinrichtung (100) versorgt wird, wenn das Datenauswahltor der Lese/Schreibschaltung (64) derart konditioniert ist, daß es die Daten mittels des Antriebsauswahlsignals durchläßt.

2. Daten transfergerät nach Anspruch 1, dadurch gekennzeichnet, daß die erste (46) und die zweite (52) Antriebsschaltung und die Lese/Schreib-Schaltung (64) sämtlich mit den Stromversorgungseinrichtungen über die Stromsteuer-Schalteinrichtung (100) verbunden ist.

3. Datentransfergerät nach Anspruch 1, dadurch gekennzeichnet, daß es des weiteren eine Wandlerpositionssteuerschaltung (54) umfaßt, die einen Zähler (58) zum Speichern von Information einschließt, welche die Position des Wandlers (22) in einer radialen Richtung des Aufzeichnungsmediums (28) angibt, um den zweiten Motor (20) über die zweite Antriebsschaltung (54) direkt mit den Stromversorgungseinrichtungen verbunden ist, so daß der Zähler (58) die gewünschte Leistungsinformation ständig vorrätig halten kann ungeachtet der Tatsache, ob das Datenauswahltor der Lese/Schreib-Schaltung derart konditioniert ist, daß es die Daten durchläßt oder diese blockiert.

4. Datentransfergerät nach Anspruch 1, dadurch gekennzeichnet, daß es des weiteren:

a) eine Sensorsteuerschaltung (88) zum Erfühlen der Winkelstellung des Aufzeichnungsmediums (28) und

b) eine "Bereit"-Schaltung umfaßt, die auf eine Ausgabe aus der Sensorsteuerschaltung (88) anspricht, um die Tatsache zu erfühlen, daß das Aufzeichnungsmedium (28) für den Datentransfer bereit ist,

c) wobei die Sensorsteuerschaltung (88) und die "Bereit"-Schaltung (90) beide mit den Stromversorgungseinrichtungen über den Stromsteuerschalter (100) verbunden sind und dadurch nur dann mit Strom versorgt werden, wenn das Datenauswahltor oder die Lese/Schreib-Schaltung (64) derart konditioniert ist, daß mittels des Antriebsauswahlsignals die Daten durchgelassen werden.

5. Datentransfergerät nach Anspruch 1, dadurch gekennzeichnet, daß die Stromversorgungseinrichtungen

a) eine erste Stromversorgungseinrichtung zum Anlegen einer ersten Speisespannung an die erste (46) und die zweite (52) Antriebsschaltung und

b) eine zweite Stromversorgungseinrichtung zum Anlegen einer zweiten Speisespannung, welche sich von der ersten Speisespannung unterscheidet, an die Lese/Schreib-Schaltung (64) umfassen und daß die Stromsteuerschalteinrichtung (100):

a) einen ersten Stromsteuerschalter (100a'), der zwischen die erste Stromversorgungseinrichtung und die erste (46) und die zweite (52) Antriebsschaltung geschaltet ist, und

b) einen zweiten Stromsteuerschalter (100a), der zwischen die zweite Stromversorgungseinrichtung und die Lese/Schreib-Schaltung (64) geschaltet ist, umfaßt.

6. Datentransfergerät nach Anspruch 1, dadurch gekennzeichnet, daß die eine der ersten (46) und zweiten (52) Antriebsschaltungen und die Lese/Schreib-Schaltung (64) die zweite Antriebsschaltung ist.

7. Datentransfergerät nach Anspruch 1, dadurch gekennzeichnet, daß es des weiteren:

a) eine "Strom an"-Sensorschaltung (122), die mit den Stromversorgungseinrichtungen verbunden ist, um eine Ausgabe zu erzeugen, wenn das Gerät elektrisch angeschaltet ist, und

b) einen Zeitgeber (120), der auf die Ausgabe aus der "Strom an"-Sensorschaltung (122) anspricht, um die Stromsteuerschalteinrichtung (100) für eine vorgeschriebene Zeitlänge geschlossen zu halten, nachdem das Gerät elektrisch angeschaltet ist, umfaßt.

8. Datentransfersystem mit einer Vielzahl von Platteneinheiten (10, 10'), die mit einer Grundausrüstung gänseblümchenverkettet sind, um von dieser gesteuert zu werden, wobei die Grundausrüstung Steuersignale einschließlich eines Antriebsauswahlsignals zur Anlegung an die Platteneinheiten erzeugt und wobei jede Platteneinheit:

a) Stromversorgungseinrichtungen;

b) eine Schnittstelle (48) zum Schaffen eines Dialogs zwischen der Grundausrüstung und der Platteneinheit (10, 10'), wobei die Schnittstelle (48) die Steuersignale aus der Grundausrüstung empfängt und direkt mit den Stromversorgungseinrichtungen verbunden ist, um von diesen mit Strom versorgt zu werden;

c) ein auswechselbares, plattenartiges Aufzeichnungsmedium (28);

d) einen Wandler (22), der für den Datentransfer mit dem Aufzeichnungsmedium (28) eingerichtet ist;

e) einen ersten Motor (20), um den Aufzeichnungsmedium (28) eine Drehung zu verleihen;

f) eine erste Antriebsschaltung (46) zum steuerbaren Antreiben des ersten Motors (20);

g) einen zweiten Motor (26) zum Bewegen des Wandlers (22) radial zum Aufzeichnungsmedium;

h) eine zweite Antriebsschaltung (52) zum steuerbaren Antreiben des zweiten Motors (26) und i) eine Lese/Schreib-Schaltung (64), die mit dem Wandler (22) verbunden ist und wenigstens ein Datenauswahltor zum Steuern der Datenpassage durch dasselbe einschließt, wobei das Datenauswahltor mit der Schnittstelle (48) zum Aufnehmen des Antriebsauswahlsignals über dieselbe aus der Grundausrüstung verbunden ist und wobei das Antriebsauswahlsignal einen ersten vorgeschriebenen Zustand, um das Datenauswahltor zu veranlassen, die Daten durchzulassen, und einen zweiten vorgeschriebenen Zustand hat, um das Datenauswahltor zu veranlassen, die Daten zu blockieren,

umfaßt, gekennzeichnet durch

j) eine Stromsteuer-Schalteinrichtung (100), die zwichen die Stromversorgungseinrichtungen und wenigstens eine der ersten (46) und zweiten (52) Antriebsschaltungen und der Lese/Schreib-Schaltung (64) geschaltet ist, wobei die Stromsteuer-Schalteinrichtung (100) geschlossen werden kann, wenn das Antriebsauswahl signal sich in dem ersten vorgeschriebenen Zustand befindet, und geöffnet werden kann, wenn das Antriebsauswahlsignal sich in dem zweiten vorgeschriebenen Zustand befindet,

k) wodurch die eine der ersten (46) und zweiten (52) Antriebsschaltungen und der Lese/Schreib-Schaltung (64) jeder Platteneinheit (10, 10') nur dann mit elektrischem Strom aus den Stromversorgungseinrichtungen über die Stromsteuer-Schalteinrichtung versorgt wird, wenn das Datenauswahltor der Lese/Schreib-Schaltung (64) derart konditioniert ist, daß es die Daten mittels des zugeordneten Antriebsauswahlsignals durchläßt.

**Revendications**

1. Appareil de transfert de données utilisable avec un support d'enregistrement en forme de disque (28), tel qu'un disque magnétique souple, l'appareil comprenant:

(a) un premier moteur (20) d'entraînement en rotation du support d'enregistrement (28);

(b) un premier circuit d'entraînement (46) pour entraîner le premier moteur (20) de façon commandée;

(c) un transducteur (22) prévu pour un transfert de données avec le support d'enregistrement (28);

(d) un deuxième moteur (26) pour déplacer le transducteur (22) dans la direction radiale du support d'enregistrement (28);

(e) un deuxième circuit d'entraînement (52) pour entraîner le deuxième moteur (26) de manière commandée;

(f) un circuit de lecture/écriture (64) connecté au transducteur (22) et comprenant au moins une porte de sélection de données, pour commander le passage de données par ladite porte;

(g) des moyens d'application d'un signal de sélection de fonctionnement à la porte de sélection de données du circuit de lecture/écriture (64) afin que ce circuit transmette sélectivement les données, le signal de sélection de fonctionnement ayant un premier état spécifié, pour provoquer le passage des données par la porte de sélection de données, et un deuxième état spécifié pour provoquer le blocage des données par la porte de sélection de données;

(h) des moyens d'alimentation en énergie pour amener une énergie électrique aux premier (46) et deuxième (52) circuits d'entraînement et au circuit de lecture/écriture (64);

caractérisé en ce que

(i) des moyens (100) de commutation de commande d'alimentation sont connectés entre les moyens d'alimentation en énergie et au moins un circuit faisant partie des premier (46) et deuxième (52) circuits d'entraînement et du circuit de lecture/écriture (64), les moyens (100) de commutation de commande d'alimentation étant prévus pour être fermés lorsque le signal de sélection de fonctionnement est dans le premier état spécifié et pour être ouverts lorsque le signal de sélection de fonctionnement est dans le deuxième état spécifié;

(j) de sorte que ledit au moins circuit des premier (46) et deuxième (52) circuits d'entraînement et du circuit de lecture/écriture (64) est alimenté en énergie électrique à partir des moyens d'alimentation en énergie, par l'intermédiaire des moyens de commutation de commande d'alimentation, seulement lorsque la porte de sélection de données du circuit de lecture/écriture (64) est excitée, pour permettre le passage des données, par le signal de sélection de fonctionnement.

2. Appareil de transfert de données suivant la revendication 1, caractérisé en ce que les premier (46) et deuxième (52) circuits d'entraînement et le circuit de lecture/écriture (64) sont tous connectés aux moyens d'alimentation en énergie par l'intermédiaire des moyens (100) de commutation de commande d'alimentation.

3. Appareil de transfert de données suivant la revendication 1, caractérisé en ce qu'il comprend en outre un circuit (54) de commande de position de transducteur, comportant un compteur (58) pour stocker une information indicative de la position dudit transducteur (22) dans une direction radiale du support d'enregistrement (28), afin de commander le deuxième moteur (20) par l'intermédiaire du deuxième circuit d'entraînement (52), le circuit (54) de commande de position de transducteur étant connecté directement aux moyens d'alimentation en énergie de sorte que le compteur (58) peut retenir constamment en mémoire l'information désirée qui est alimentée indépendamment de ce que la porte de sélection de données du circuit de lecture/écriture est excitée pour transmettre ou pour bloquer les données.

4. Appareil de transfert de données suivant la revendication 1, caractérisé en ce qu'il comprend en outre:

(a) un circuit (88) de commande de détecteur, pour détecter la position angulaire du support d'enregistrement (28), et

(b) un circuit "prêt" qui est commandé par une sortie du circuit (88) de commande de détecteur, pour détecter le fait que le support d'enregistrement (28) est prêt pour un transfert de données;

(c) le circuit (88) de commande de détecteur et le circuit "prêt" (90) étant tous deux connectés aux moyens d'alimentation en énergie par l'intermédiaire du commutateur de commande d'alimentation (100) et étant ainsi alimentés seulement lorsque la porte de sélection de données ou le circuit de lecture/écriture (64) est excité, pour le passage des données, par le signal de sélection de fonctionnement.

5. Appareil de transfert de données suivant la revendication 1, caractérisé en ce que les moyens d'alimentation en énergie comprennent:

(a) des premiers moyens d'alimentation en énergie pour appliquer une première tension d'alimentation aux premier (46) et deuxième (52) circuits d'entraînement et

(b) des deuxièmes moyens d'alimentation en énergie pour appliquer une deuxième tension d'alimentation, différente de la première tension d'alimentation, au circuit de lecture/écriture (64);

et en ce que les moyens (100) de commutation de commande d'alimentation comprennent:

(a) un premier commutateur de commande d'alimentation (100a') connecté entre les moyens d'alimentation en énergie et les premier (46) et deuxième (52) circuits d'entraînement, et

(b) un deuxième commutateur de commande d'alimentation (100a) connecté entre les deuxièmes moyens d'alimentation en énergie et le circuit de lecture/écriture (64).

6. Appareil de transfert de données suivant la revendication 1, caractérisé en ce que ledit au moins circuit des premier (46) et deuxième (52) circuits d'entraînement et du circuit de lecture/écriture (64) est le deuxième circuit d'entraînement.

7. Appareil de transfert de données suivant la revendication 1, caractérisé en ce qu'il comprend en outre:

(a) un circuit détecteur de "mise sous tension" (122) connecté aux moyens d'alimentation en énergie, pour produire une sortie lorsque l'appareil est électriquement mis en service, et

(b) une minuterie (120) qui est commandée par la sortie du circuit détecteur de "mise sous tension" (122) pour maintenir les moyens de commutation de commande d'alimentation (100) fermés pendant un laps de temps spécifié, après la mise en service électrique de l'appareil.

8. Système de transfert de données comprenant une pluralité d'entraînement de disques (10, 10') reliés en chaîne à un équipement central de manière à être commandés par celui-ci, l'équipement central fournissant des signaux de commande comprenant un signal de sélection de fonctionnement pour application aux entraînements de disques, chaque entraînement de disque comprenant:

(a) des moyens d'alimentation en énergie;

(b) une interface (48) pour assurer l'interaction entre l'équipement central et l'entraînement de disque (10, 10'), l'interface (48) recevant les signaux de commande venant de l'équipement central et étant connectée directement aux moyens d'alimentation en énergie pour être alimentée par ces derniers;

(c) un support d'enregistrement (28) en forme de disque remplaçable;

(d) un transducteur (22) prévu pour le transfert de données avec le support d'enregistrement (28);

(e) un premier moteur (20) pour communiquer une rotation au support d'enregistrement (28);

(f) un premier circuit d'entraînement (46) pour l'entraînement du premier moteur (20) de façon commandée;

(g) un deuxième moteur (26) pour déplacer le transducteur (22) dans la direction radiale du support d'enregistrement;

(h) un deuxième circuit d'entraînement (52) pour l'entraînement du deuxième moteur (26) de façon commandée;

(i) un circuit de lecture/écriture (64) connecté au transducteur (22) et comprenant au moins une porte de sélection de données pour commander le passage de données à travers ladite porte, la porte de sélection de données étant connectée à l'interface (48) pour recevoir par son intermédiaire le signal de sélection de fonctionnement provenant de l'équipement central, le signal de sélection de fonctionnement ayant un premier état spécifié, pour provoquer le passage des données par la porte de sélection de données, et un deuxième état spécifié, pour provoquer le blocage des données par la porte de sélection de données,

caractérisé en ce que

(j) les moyens (100) de commutation de commande d'alimentation sont connectés entre les moyens d'alimentation en énergie et au moins un circuit faisant partie des premier (46) et deuxième (52) circuits d'entraînement et du circuit de lecture/écriture (64), les moyens de commutation (100) de commande d'alimentation étant prévus pour être fermés lorsque le signal de sélection de fonctionnement est dans le premier état spécifié et pour être ouverts lorsque le signal de sélection de fonctionnement est dans le deuxième état spécifié;

(k) de sorte que ledit au moins circuit des premier (46) et deuxième (52) circuits d'entraînement et du circuit de lecture/écriture (64) de chaque entraînement de disque (10, 10') est alimenté en énergie électrique venant des moyens d'alimentation en énergie, par l'intermédiaire des moyens de commutation de commande d'alimentation, seulement lorsque la porte de sélection de données du circuit de lecture/écriture (64) est conditionnée, pour le passage des données dans cette porte, par le signal de sélection de fonctionnement associé.

FIG.1

FIRST FLOPPY DISK DRIVE

SECOND FLOPPY DISK DRIVE

0 133 232

# FIG.3

DRIVE SELECT SIGNAL

22

74

72 PULSE SHAPER

76

OUTGOING DATA

80 WRITE CURRENT SUPPLY

78

64

WRITE GATE SIGNAL

INCOMING DATA

FILE PROTECT SIGNAL

# FIG.4

102    108    104

106    112    110    100

DRIVE SELECT SIGNAL

# FIG.2

44

40

42

38

18

36    34

32

28    30

# FIG.5

(A) EXTERNAL POWER LINE 102 — ON

(B) MOTOR ON SIGNAL — H / L

(C) FIRST DRIVE SELECT SIGNAL — H / L

(D) SECOND DRIVE SELECT SIGNAL

(E) INTERNAL POWER LINE 104 — ON / OFF

$t_1$ $t_2$ $t_3$ $t_4$ $t_5$ $t_6$ $t_7$ $t_8$

0 133 232

# FIG.6

INTERFACE 48

HEAD MOTOR CONTROL 56

UP/DOWN COUNTER 58

SENSOR CONTROL 88

READ/WRITE 64

READY 90

DISK MOTOR CONTROL & DRIVE 46

HEAD MOTOR DRIVE 52

DRIVE SELECT SIGNAL

+ 5V

102a

100a

+ 12V

102a'

100a'

# FIG.7

MOTOR ON SIGNAL

DISK MOTOR CONTROL & DRIVE 46

HEAD MOTOR DRIVE 52

DRIVE SELECT SIGNAL

102

100

4

## FIG.8

DRIVE SELECT
SIGNAL

"POWER ON"
SENSOR

TIMER

120

122

100

102

## FIG.9

18a

28a

130

140

138

142

144

134 132 136